# EUROPEAN PATENT SPECIFICATION

(11) **EP 2 734 005 B1**
(45) Date of publication and mention of the grant of the patent: **08.05.2019**
(21) Application number: 12811795.9
(22) Date of filing: 11.07.2012
(51) Int. Cl.: H04W 72/08, H04W 72/12

(54) **METHOD OF ALLOCATING RESOURCE, WIRELESS COMMUNICATION SYSTEM, BASE STATION, AND PROGRAM**
RESSOURCENZUWEISUNGSVERFAHREN, DRAHTLOSES KOMMUNIKATIONSSYSTEM, BASISSTATION UND PROGRAMM
PROCÉDÉ D'ALLOCATION DE RESSOURCE, SYSTÈME DE COMMUNICATION SANS FIL, STATION DE BASE ET PROGRAMME

(30) Priority: 14.07.2011 JP 2011155954
(43) Date of publication of application: 21.05.2014
(73) Proprietor: NEC Corporation, Tokyo 108-8001 (JP)
(72) Inventor: NOBUKIYO Takahiro, Tokyo 108-8001 (JP)
(74) Representative: MacDougall, Alan John Shaw
(86) International application number: PCT/JP2012/067677
(87) International publication number: WO 2013/008839

(56) References cited:
- EP-A1- 2 106 187
- WO-A1-2008/156064
- WO-A1-2010/100828

## Description

### [TECHNICAL FIELD]

The present invention relates to a resource allocation method, a wireless communication system, a base station, and a program.

### [BACKGROUND ART]

In cellular environments, such as LTE (Long Term Evolution) standardized in the 3GPP (3rd Generation Partnership Project), it is assumed that a plurality of wireless base stations are disposed, where each wireless base station communicates with wireless terminals within its communication area. The communication area is referred to as cell, which may be divided into a plurality of sub-regions by imparting directivity to an antenna. The sub-region is referred to as sector cell. In the following description, the term cell refers to a sector cell.

In LTE, dynamic scheduling and persistent scheduling are for a scheduling method. (Refer to NPL 1, for example.)
In dynamic scheduling, resources are allocated in each TTI (Transmission Time Interval) depending upon channel quality for a terminal. A term resource refers to PRB (Physical Resource Block), which is a unit of allocation of a wireless band, and MCS (Modulation and Coding Schemes). While dynamic scheduling is capable of allocating PRB having good quality of reception because channel quality is used to achieve scheduling, scheduling information needs to be transmitted via a control channel each time resources are allocated. Therefore, in case that resources for the control channel become insufficient, the number of users that can perform transmission at the same transmission time is limited. In general, dynamic scheduling is applied to burst traffic having irregular intervals of occurrence or having an irregular size.

On the other hand, a reservation-type scheduling method, referred to as persistent scheduling, is a scheduling method taking advantage of regularity of the cycle of occurrence of traffic, which is encountered in VoIP (Voice over Internet Protocol) or the like, for reserving cyclically usable resources. By the reservation, transmission of scheduling information on a TTI-by-TTI basis can be omitted to avoid resource insufficiency for the control channel. Thus, persistent scheduling may be used in traffic with smaller data size, such as VoIP traffic, to significantly increase the number of terminals that can perform transmission at the same transmission time as compared with that in dynamic scheduling. In general, dynamic scheduling is applied to VoIP traffic that has periodicity in intervals of occurrence and has a smaller data size.

The VoIP traffic is comprised of a non-silent segment and a silent segment, and persistent scheduling that is applied to a specific segment, such as a non-silent segment, is particularly referred to as semi-persistent scheduling. The term non-silent segment refers to a segment in which voice packets successively arrive. The term silent segment refers to a segment in which background noise packets (SID (Silence Insertion Description) Packets) successively arrive.

The size of a packet occurring in a non-silent segment is greater than that of a packet occurring in a silent segment. Moreover, the cycle of occurrence of packets occurring in a non-silent segment is shorter than that of packets occurring in a silent segment. Generally, since a transmission fail in a silent segment does not affect QoS, persistent scheduling is applied only to a non-silent segment to avoid needless resource allocation to a silent segment.

### [CITATION LIST]

### [NON PATENT LITERATURE]

NPL 1: 3GPP TS 36.300 V9.7.0 (2011-03), 3GPP TSG RAN E-UTRA and E-UTRAN Overall description Stage 2, pp. 75 - 76

### [SUMMARY OF INVENTION]

### [TECHNICAL PROBLEM]

When applying persistent scheduling to traffic cyclically occurring and having a smaller data size, such as VoIP traffic, however, a problem is caused that a delay in transmission of packets is increased, and QoS (Quality of Service) defined for each service in traffic, such as the allowable delay time (Delay Budget) or guaranteed bit rate (GBR), is not satisfied.

Persistent scheduling is a scheduling method in which PRB reserved beforehand is persistently allocated. Thus, when a received signal in the reserved PRB continually drops or the reserved PRB is continually subjected to strong interference from an adjacent cell, quality of reception is significantly degraded. Moreover, a terminal near cell edge is likely to fail to attain quality of reception to transmit voice packet data within one TTI, resulting in an increased number of retransmission. From these reasons, application of persistent scheduling causes a problem that QoS cannot be satisfied due to an increased likeliness of fails of packet transmission, leading to an increased delay of transmission.

The present invention has been made in view of such problems, and its object is to provide a resource allocation method, a wireless communication system, a base station, and a program capable of expanding the area (coverage) in which QoS is satisfied while maintaining the maximum number of admissible terminals (capacity).

EP2106187 discloses an apparatus comprising a controller for controlling radio communication using communication resources for user data communication, and control resources for controlling communication on the communication resources, an allocator for allocating mobile stations to use at least one of a dynamic allocation and a persistent allocation, each allocation defining a different utilization of the control resources and communication resources, a monitor for monitoring one or more reallocation conditions associated with at least one of the dynamic allocation and the persistent allocation, and a reallocator configured to reallocate at least one mobile station if one of the one or more reallocation conditions is fulfilled.

WO2008/156064 discloses a base station apparatus to be used for a mobile communication system capable of providing communications using plural frequency carriers. The base station apparatus includes a frequency carrier selection unit selecting one of a first frequency carrier and a second frequency carrier as a frequency carrier to be used for the communications based on at least one of a service type of the communications and a congestion degree of the communications, the first frequency carrier being used for communications based on allocation in which radio resources are dynamically allocated, the second frequency carrier being used for communications based on allocation in which the radio resources are allocated at every predetermined period.

WO2010/100828 discloses a resource reallocation method that can suppress variations in reception delay time in reservation-type scheduling and a communication device using the method. In a radio communications system in which a radio resource is reserved to periodically perform a communication between communication devices, the number of retransmissions of a packet transmitted to a communication device using the reserved radio resource is measured, and reallocation of a radio resource to be used for the communication is performed depending on the number of retransmissions.

### [DISCLOSURE OF THE INVENTION]

The present invention is a wireless resource allocation method for a base station performing data communication with wireless terminals with traffic having periodicity in intervals of occurrence, said method comprising: acquiring communication channel quality for each of said terminals; measuring a number of terminals for which a non-reservation-type scheduling method, with which allocation information is notified to the terminal each time wireless resources are allocated, is currently selected; in case that said communication channel quality is greater than, or is equal to or greater than a threshold for quality decision, selecting a reservation-type scheduling method with which cyclically usable wireless resources are reserved; and in case that said communication channel quality is equal to or smaller than, or is smaller than said threshold for quality decision and the number of terminals for which said method is currently selected is equal to or smaller than, or is smaller than a threshold of the number of admissible terminals, selecting the non-reservation-type scheduling method; and performing data communication with said terminals using said selected scheduling method.

The present invention is a wireless communication system comprised of a base station and a wireless terminal, for conducting wireless resource allocation to perform data communication between said base station and said wireless terminals with traffic having periodicity in intervals of occurrence, said base station comprising: a communication channel quality acquiring section for acquiring communication channel quality for each of said terminals; a scheduling method selecting section for measuring a number of terminals for which a non-reservation-type scheduling method, with which allocation information is notified to the terminal each time wireless resources are allocated, is currently selected; in case that said communication channel quality is greater than, or is equal to or greater than a threshold for quality decision, selecting a reservation-type scheduling method with which cyclically usable wireless resources are reserved, and in case that said communication channel quality is equal to or smaller than, or is smaller than the threshold for quality decision and the number of terminals for which said method is currently selected is equal to or smaller than, or is smaller than a threshold of the number of admissible terminals, selecting the non-reservation-type scheduling method; and a scheduling section for performing data communication by applying said selected scheduling method to said terminals.

The present invention is a base station for conducting wireless resource allocation to perform data communication with wireless terminals with traffic having periodicity in intervals of occurrence, said base station comprising: a communication channel quality acquiring section for acquiring communication channel quality for each of said terminals; a scheduling method selecting section for measuring a number of terminals for which a non-reservation-type scheduling method, with which allocation information is notified to the terminal each time wireless resources are allocated, is currently selected; in case that said communication channel quality is greater than, or is equal to or greater than a threshold for quality decision, selecting a reservation-type scheduling method with which cyclically usable wireless resources are reserved; and in case that said communication channel quality is equal to or smaller than, or is smaller than the threshold for quality decision and the number of terminals for which said method is currently selected is equal to or smaller than, or is smaller than a threshold of the number of admissible terminals, selecting the non-reservation-type scheduling method; and a scheduling section for performing data communication by applying said selected scheduling method to said terminals.

The present invention is a program for a computer for conducting wireless resource allocation to perform data communication with wireless terminals with traffic having periodicity in intervals of occurrence, said program causing a program to execute processing of: acquiring communication channel quality for each of said terminals; measuring a number of terminals for which a non-reservation-type scheduling method, with which allocation information is notified to the terminal each time wireless resources are allocated, is currently selected; in case that said communication channel quality is greater than, or is equal to or greater than a threshold for quality decision, selecting a reservation-type scheduling method with which cyclically usable wireless resources are reserved; and in case that said communication channel quality is equal to or smaller than, or is smaller than the threshold for quality decision and the number of terminals for which said method is currently selected is equal to or smaller than, or is smaller than a threshold of the number of admissible terminals, selecting the non-reservation-type scheduling method; and performing data communication with said terminals while applying said selected scheduling method.

### [ADVANTAGEOUS EFFECTS OF INVENTION]

According to the present invention, the area (coverage) in which QoS can be satisfied can be expanded while maintaining the maximum number of admissible terminals (capacity).

### [BRIEF DESCRIPTION OF DRAWINGS]

FIG. 1 is a flow chart showing a configuration of a wireless communications system in a first embodiment.
FIG. 2 is a flow chart showing decision processing for scheduling method selection in the first embodiment.
FIG. 3 is a flow chart showing decision processing for a non-silent segment and a silent segment in the first embodiment.
FIG. 4 is a flow chart showing decision processing for setting a scheduling method in the first embodiment.
FIG. 5 is a flow chart showing decision processing for scheduling method selection in a second embodiment.
FIG. 6 is a flow chart showing decision processing for scheduling method selection in a third embodiment.
FIG. 7 is a flow chart showing a configuration of a wireless communication system in a fourth embodiment.
FIG. 8 is a flow chart showing decision processing for a non-silent segment and a silent segment in the fourth embodiment.

### [DESCRIPTION OF EMBODIMENTS]

### <First Embodiment>

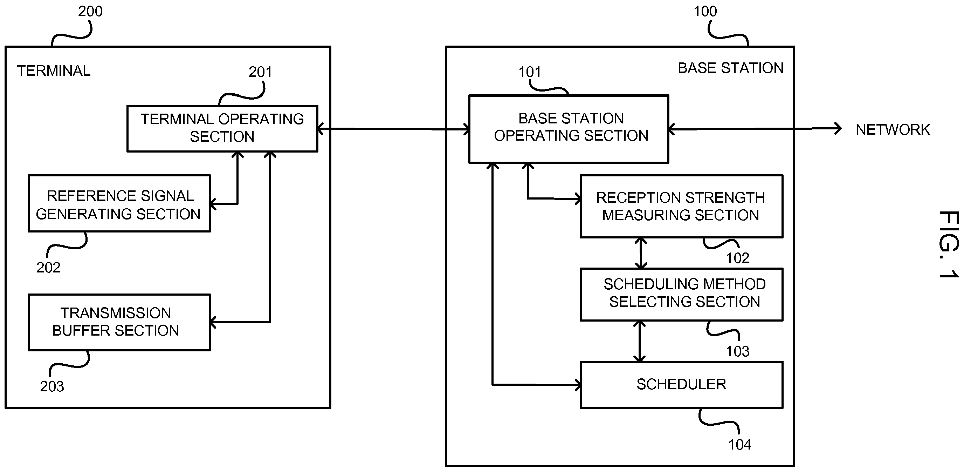

FIG. 1 is a block diagram showing a configuration of a wireless communication system in a first embodiment of the present invention.

Referring to FIG. 1, the wireless communication system includes a base station 100 and a terminal 200. The base station 100 is a wireless communication apparatus for performing wireless communication with the terminal 200 present in a communication area of the base station 100 through a wireless channel, and the base station 100 may be connected with a network (not shown) to perform data communication with adjacent base stations. Although not shown, the base station 100 can be connected with a plurality of terminals. A plurality of base stations may be present as well. A wireless band is divided into resource blocks (RBs) as the unit of allocation. In the present embodiment, LTE uplink is taken as an example for describing the wireless communication system.

The base station 100 comprises principal functional sections including a base station operating section 101, a reception strength measuring section 102, a scheduling method selecting section 103, and a scheduler 104.

The base station operating section 101 has a similar function to that of base stations commonly used in a wireless communication system, and description thereof will be omitted because its configuration and operation are widely known in the art.

The reception strength measuring section 102 has a function of measuring communication channel quality, such as a received power of reference signals and/or data signals received from a terminal, and SINR (Signal to Interference plus Noise Ratio), and reporting the result to the base station operating section 101 and/or scheduling method selecting section 103 as information on communication channel quality. To achieve scheduling depending upon communication channel quality for data signals, a signal component and an interference component are obtained using a result of the measurement of reference signals and a result of the measurement of data signals, respectively.

The scheduling method selecting section 103 has a function of deciding a non-silent segment and a silent segment in VoIP traffic of the terminal. The scheduling method selecting section 103 further has a function of deciding which of dynamic scheduling (DS: Dynamic Scheduling) and semi-persistent scheduling (SPS: Semi-Persistent Scheduling) is to be selected for the terminal based on the information on communication channel quality measured by the reception strength measuring section 102 and/or a buffer status report (BSR) from the terminal. A result of the decision is notified to the scheduler 104. In this embodiment, the information on communication channel quality used in the scheduling method selecting section 103 is assumed to be SINR.

The scheduler 104 has a function of determining PRB to be allocated to the terminal 200 and MCS by dynamic scheduling or persistent scheduling based on a result of the decision by the scheduling method selecting section 103, and a function of deallocating resources allocated by persistent scheduling. Scheduling information for such allocation and deallocation is notified to the terminal via the base station operating section 101.

In dynamic scheduling, resources are allocated to maximize the transmission data size (TBS: Transport Block Size). TBS can be calculated referring to a look-up table and using the TBS index and number of allocated RBs. A method of calculating TBS is described in NPL 2 (3GPP TS 36.213 V9.3.0 (2010-09), 3GPP TSG RAN EUTRAN Physical layer procedures, pp. 27 - 34), for example. At that time, the TBS index may also be uniquely determined referring to a look-up table (NPL 2) and using the MCS index. The MCS index can be calculated referring to a look-up table and using the effective SINR for data signals. The effective SINR is a representative value of SINR for allocated RBs calculated taking account of variabilities in SINR of the RBs, which is measured by the reception strength measuring section 102. The look-up table for calculating an MCS index from SINR is generally created by link level simulation simulating a physical layer.

In persistent scheduling, resources are allocated using SINR averaged over all RBs usable in transmission of data signals so that a voice packet can be transmitted within one TTI.

The terminal 200 comprises principal functional sections including a terminal operating section 201, a reference signal generating section 202, and a transmission buffer section 203.

The terminal operating section 201 has a similar function to that of terminals commonly used in a wireless communication system, and description thereof will be omitted because its configuration and operation are widely known in the art.

The reference signal generating section 202 has a function of transmitting a reference signal serving as a basis of communication channel quality to the base station 100 via the terminal operating section 201 with certain timing.

The transmission buffer section 203 has a function of generating traffic data, and a function of transmitting (reporting) traffic information, such as the size of queued traffic (buffer size), in BSR via the terminal operating section 201 to the base station 100. In LTE, a logical wireless channel is generally established according to the traffic type. In uplink, a logical channel group is constructed from one or more logical channels, and BSR is reported for each logical channel group.

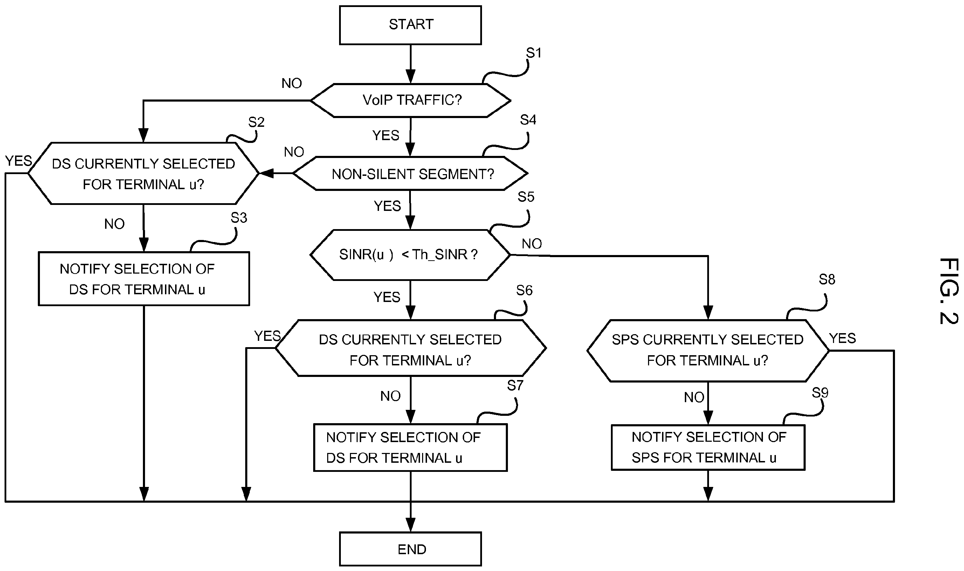

Next, an operation of the present embodiment will be described referring to FIGs. 2, 3 and 4.

FIG. 2 shows an operation procedure of the scheduling method selecting section 103 for deciding which of dynamic scheduling and semi-persistent scheduling is to be selected as a scheduling method for the terminal. This operation is conducted in a certain cycle defined for each terminal.

First, the scheduling method selecting section 103 decide whether traffic for a terminal u is VoIP traffic (S1). The decision of traffic is conducted using QCI (QoS Class Identifier) (refer to NPL 3: 3GPP TS 23.203 V9.9.0 (2011-06), 3GPP TSG SSAPolicy and charging control architecture, pp. 30 - 33, for example) parameters. QCI can define QoS class definition to define a type of GBR and Non-GBR, Priority, Packet Delay Budget, and so forth.

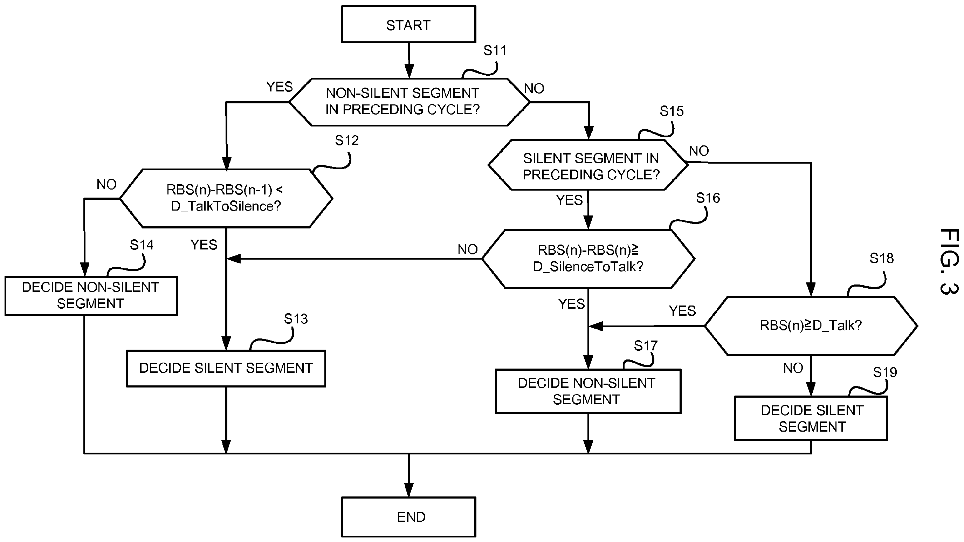

Next, in case that the traffic is not VoIP traffic (S1, No), and in case that dynamic scheduling is not currently selected for the terminal u (S2, No), the decision to select dynamic scheduling for the terminal u is notified to the scheduler 104 (S3). In case that the traffic is VoIP traffic (S1, Yes) and is not in a non-silent segment (S4, No), and in case that dynamic scheduling is not currently selected for the terminal u (S2, No), dynamic scheduling is selected for the terminal u (S3). An operation procedure for discriminating between a non-silent segment and a silent segment will be described with reference to FIG. 3.

Next, in case that the traffic is in a non-silent segment (S4, Yes), and SINR(u) in the information on communication channel quality is smaller than a threshold Th_SINR (S5, Yes), and in case that dynamic scheduling is not currently selected for the terminal u (S6, No), the decision to select dynamic scheduling for the terminal u is notified to the scheduler 104 (S7). In case that SINR(u) is equal to or greater than the threshold Th SINR (S5, No), and in case that semi-persistent scheduling is not currently selected for the terminal u (S8, No), the decision to select semi-persistent scheduling for the terminal u is notified to the scheduler 104 (S9).

While the preceding description of the operation of the present embodiment addresses a case in which SINR(u) in the information on communication channel quality is smaller than the threshold Th_SINR (S5, Yes), and a case in which SINR(u) in the information on communication channel quality is equal to or greater than the threshold Th_SINR (S5, No), scheduling may be selected splitting the cases into one in which SINR(u) in the information on communication channel quality is equal to or smaller than the threshold Th_SINR, and one in which SINR(u) in the information on communication channel quality is greater than the threshold Th_SINR. This applies to description of the following embodiments.

FIG. 3 shows an operation procedure for the scheduling method selecting section 103 to decide the condition of VoIP traffic in a terminal between a non-silent segment or a silent segment. The present operation procedure is executed in a presumed cycle of arrival of voice packets.

First, in case that the scheduling method selecting section 103 decides that the condition was in a non-silent segment in a preceding cycle (S11, Yes), it compares the latest n-th BSR with the preceding ((n-1)-th) BSR, and in case that the amount of an increase of the buffer size (RBS(n) - RBS(n-1)) is smaller than a threshold D_TalkToSilence (S12, Yes), it decides that the condition transitions to a silent segment (S13). D_TalkToSilence is a threshold for deciding transition from a non-silent segment to a silent segment. On the other hand, in case that the amount is equal to or greater than D_TalkToSilence (S12, No), the section 103 decides that the condition is still in a non-silent segment (S14).

In case that the condition was not in a non-silent segment in the preceding cycle (S11, No), and is decided to be a silent segment (S15, Yes), and in case that the amount of an increase of the buffer size is equal to or greater than a threshold D_SilenceToTalk, which is different from that used in S12 (S16, Yes), the section 103 decides that the condition transitions to a non-silent segment (S17). D_SilenceToTalk is a threshold for deciding transition from a silent segment to a non-silent segment. On the other hand, in case that the amount is smaller than D_SilenceToTalk (S16, No), the section 103 decides that the condition is still in a silent segment (S13).

In case that the condition is not decided to be in a silent segment in the preceding cycle either, the current cycle is a first decision (S15, No). In this case, in case that RBS(n) is equal to or greater than a threshold D_Talk (S18, Yes), the condition is decided to be in a non-silent segment (S17), and in case that RBS(n) is smaller than D_Talk (S18, No), the condition is decided to be in a silent segment (S19). D_Talk is a threshold for deciding a non-silent segment.

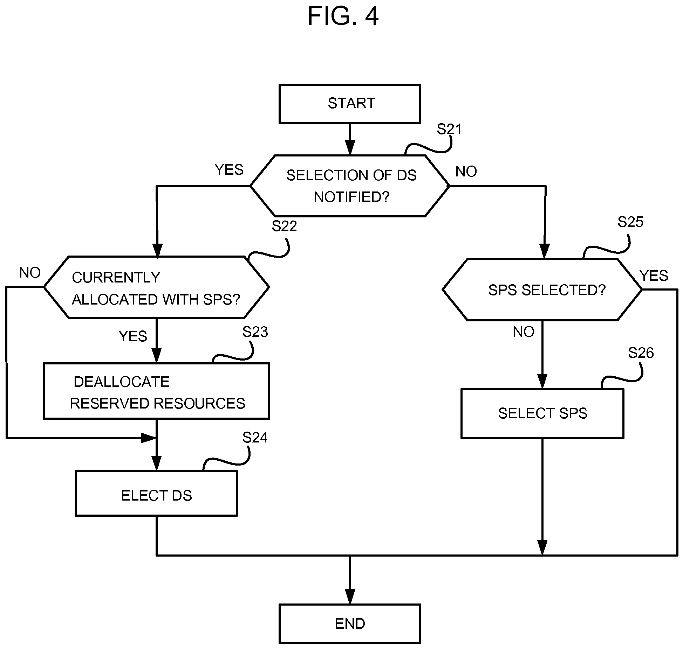

FIG. 4 shows an operation procedure for the scheduler 104 to set a scheduling method for a terminal based on a result of the decision by the scheduling method selecting section 103.

First, in case that the decision to select dynamic scheduling for the terminal u is notified from the scheduling method selecting section 103 (S21, Yes), and in case that resources are currently allocated to the terminal u with semi-persistent scheduling (S22, Yes), the scheduler 104 deallocates the reserved resources. Then, dynamic scheduling is selected as the scheduling method for the terminal u (S24).

In case that the decision to select semi-persistent scheduling for the terminal u is notified from the scheduling method selecting section 103 (S21, No), and in case that semi-persistent scheduling is not currently selected (S25, No), semi-persistent scheduling is newly selected and reservation of resources is made (S26).

For a terminal for which no scheduling method is selected, the scheduler 104 applies dynamic scheduling as an initial setting.

According to the present embodiment, since dynamic scheduling is selected for terminals having low SINR, and semi-persistent scheduling is selected for other terminals, coverage can be expanded by dynamic scheduling while avoiding degradation of capacity due to insufficient resources for the control channel for transmitting scheduling information.

While in this embodiment, selection of a scheduling method in FIG. 2 is applied only to VoIP traffic, the present invention is not limited thereto, and the selection may be applied to any traffic having periodicity in intervals of occurrence and having a smaller data size, such as traffic of gaming, for example, wherein traffic of a guaranteed bit rate (GBR) type having a smaller data size falls under such traffic.

While in this embodiment, decision of VoIP traffic in FIG. 2 is made once per terminal, the present invention is not limited thereto, and the decision may be made for each logical channel group, for example. In this case, persistent scheduling and dynamic scheduling may be employed in combination for terminals in which both VoIP traffic and burst traffic occur.

While in this embodiment, communication channel quality according to which a scheduling method is selected in FIG. 2 uses SINR, the present invention is not limited thereto, and a path loss difference, for example, between a current cell in the communication area of the current station and an adjacent cell in the communication area of an adjacent station may be used. Alternatively, a difference in the reference received power (RSRP: Reference Signal Received Power) between the current cell and an adjacent cell may be used. Alternatively, a ratio of the total received power to the reference signal received power (RSRQ: Reference Signal Received Quality) may be used.

While in this embodiment, transition between a non-silent segment and a silent segment in FIG. 3 is decided with reference to a result of only one measurement of the amount of an increase of the buffer size, the present invention is not limited thereto, and a decision that the condition transitions from a non-silent segment to a silent segment may be made at S12 in case that a condition in which (RBS(n) - RBS(n-1)) is smaller than D_TalkToSilence continues over N consecutive cycles, for example. This allows for fluctuations of the time of arrival of voice packets and improves accuracy in decision between a non-silent segment and a silent segment.

While in this embodiment, decision between a non-silent segment and a silent segment in FIG. 3 employs a difference in presumed size of packets between a non-silent segment and a silent segment, the present invention is not limited thereto, and, for example, a difference in presumed cycle of occurrence of packets between a non-silent segment and a silent segment may be employed. For example, a decision that the condition transitions from a non-silent segment to a silent segment may be made in a case the amount of an increase of the buffer size within a certain segment is smaller than a threshold.

While in this embodiment, decision between a non-silent segment and a silent segment in FIG. 3 employs BSR, the present invention is not limited thereto, and a condition of reception at a base station may be employed. For example, a decision that the condition transitions to a silent segment may be made in case that the base station does not receive traffic data equal to or greater than a threshold within a certain segment.

While in this embodiment, the present operation procedure as in FIG. 2 or 3 is conducted only in a certain cycle, the present invention is not limited thereto, and it may be conducted when connection is established between a terminal and a base station, for example.

As described above, according to the present embodiment, for traffic having periodicity in intervals of occurrence and having a smaller data size, the area in which QoS can be satisfied can be expanded while avoiding restrictions on the number of users that can perform transmission at the same transmission time due to insufficient resources for a control channel for transmitting scheduling information.

The reason thereof is that, in case that said communication channel quality is equal to or greater than a threshold for quality decision, a reservation-type scheduling method in which cyclically usable wireless resources are reserved is selected, and in case that the quality is smaller than the threshold for quality decision, a non-reservation-type scheduling method in which allocation information is notified to the terminal each time wireless resources are allocated is selected, so that data communication with the terminal is performed using the selected scheduling method.

### <Second Embodiment>

Next, a second embodiment of the present invention will be described.

Since a block diagram showing a configuration of a wireless communication system in the second embodiment is similar to that of the first embodiment, detailed description thereof will be omitted.

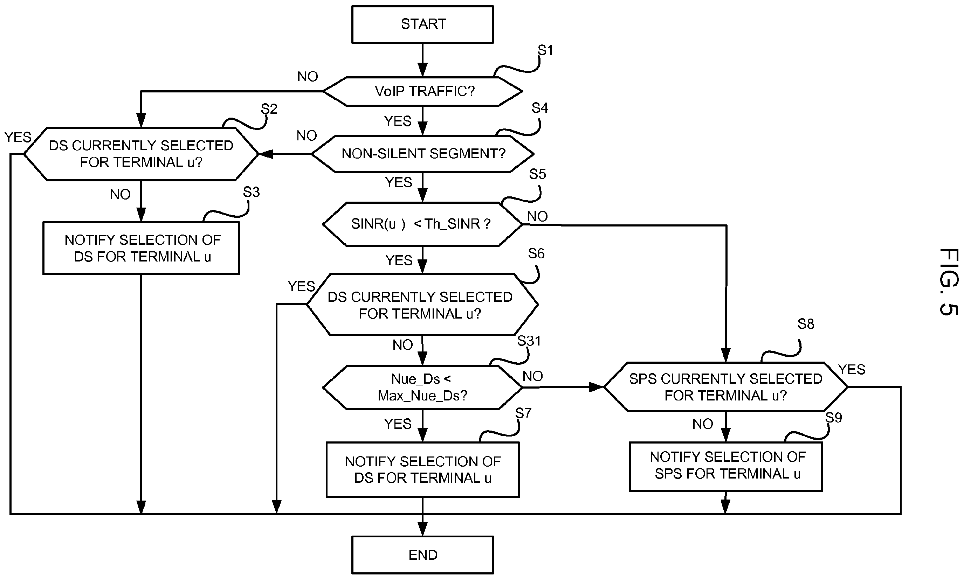

Next, an operation of the second embodiment will be described referring to the accompanying drawings. The second embodiment is different from the first embodiment in that an operation shown in FIG. 5, in place of FIG. 2, is conducted.

Referring to FIG. 5, S31 is added after "No" at S6 in FIG. 2. Specifically, in case that dynamic scheduling is not currently selected for the terminal u (S6, No), and in case that the number Nue DS of terminals for which dynamic scheduling is currently selected is smaller than a maximum number Max_Nue_DS of terminals to which dynamic scheduling is applicable, the maximum number being predefined beforehand for terminals with VoIP traffic (S31, Yes), the scheduling method selecting section 103 notifies the decision to select dynamic scheduling for the terminal u to the scheduler 104 (S7).

On the other hand, in case that Nue_DS is equal to or greater than Max_Nue_DS (S31, No), the process goes to S8, and a decision is made as to whether semi-persistent scheduling is currently selected for the terminal u.

While the present embodiment addresses a case in which the decision to select dynamic scheduling for the terminal u is notified to the scheduler 104 when the number Nue_DS of terminals is smaller than the maximum number Max_Nue_DS of terminals, the decision to select dynamic scheduling for the terminal u may be notified to the scheduler 104 when the number Nue_DS of terminals is equal to or smaller than the maximum number Max_Nue_DS of terminals. This applies to description of the following embodiments.

According to the present embodiment, as compared with the first embodiment, restrictions on the number of terminals that can perform transmission at the same transmission time and that occur when resources for a control channel for transmitting scheduling information in dynamic scheduling become insufficient, may be avoided.

While in this embodiment, Max_Nue_DS is a predefined fixed value, the present invention is not limited thereto, and it may be changed depending upon the condition of a traffic load. For example, Max_Nue_DS may be increased for a smaller number of terminals with burst traffic and decreased for a greater number of terminals with burst traffic, whereby improved coverage may be prioritized by increasing the number of VoIP terminals to which dynamic scheduling may be applied for a smaller number of terminals with burst traffic, and suppression of resource insufficiency for a control channel may be prioritized by decreasing the number of VoIP terminals to which dynamic scheduling may be applied for a greater number of terminals with burst traffic.

### <Third Embodiment>

Next, a third embodiment of the present invention will be described.

Since a block diagram showing a configuration of a wireless communication system in the third embodiment is similar to that of the first embodiment, detailed description thereof will be omitted.

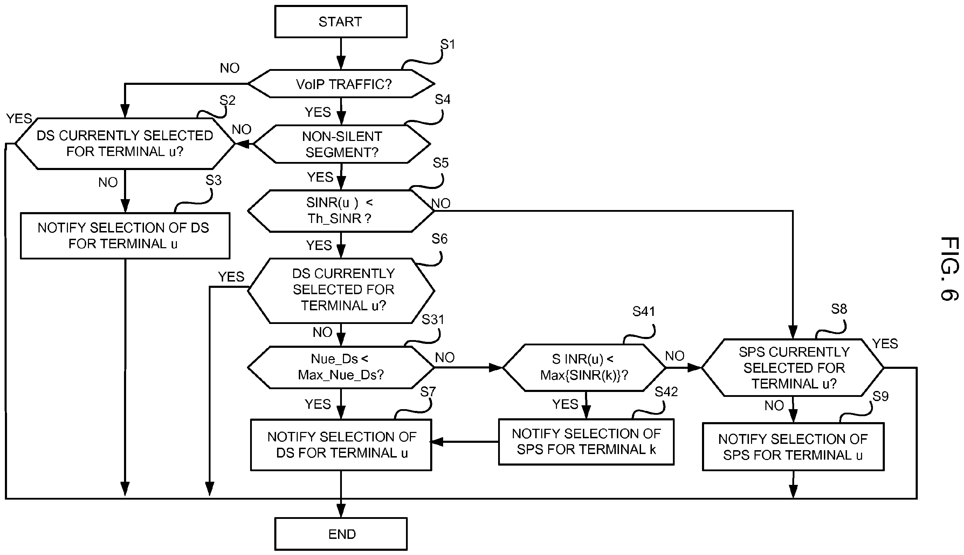

Next, an operation of the present embodiment will be described referring to the accompanying drawings. The third embodiment is different from the second embodiment in that an operation shown in FIG. 6, in place of FIG. 5, is conducted.

Referring to FIG. 6, S41 and S42 are added after "No" at S31 in FIG. 5. Specifically, in case that Nue_DS is smaller than Max_Nue_DS (S31, Yes), the scheduling method selecting section 103 compares SINR of the terminal u (SINR(u)) with that of another terminal k (SINR(k)) (S41). The terminal k is a terminal to which dynamic scheduling is applied for VoIP traffic, except the terminal u. Max{} designates a function for selecting a maximum value, and when there are a plurality of terminals, a terminal k having maximal SINR, except u, and its SINR are selected.

In case that SINR(u) is smaller than Max{SINR(k)} (S41, Yes), the decision to change a scheduling method selected for the terminal k from dynamic scheduling to semi-persistent scheduling is notified to the scheduler 104 (S42). Then, the decision to select dynamic scheduling for the terminal u is notified to the scheduler 104 (S7). In case that SINR(u) is equal to or greater than Max{SINR(k)} (S41, No), the process goes to S8, and a decision is made as to whether semi-persistent scheduling is currently selected for the terminal u.

According to the present embodiment, as compared with the second embodiment, dynamic scheduling may be selected while prioritizing terminals having lower SINR, so that coverage may be further improved while avoiding restrictions on the number of terminals that can perform transmission at the same transmission time and that occur when resources for a control channel for transmitting scheduling information in dynamic scheduling become insufficient.

### <Fourth Embodiment>

Next, a fourth embodiment of the present invention will be described. In the present embodiment, LTE downlink is taken as an example for the wireless communication system.

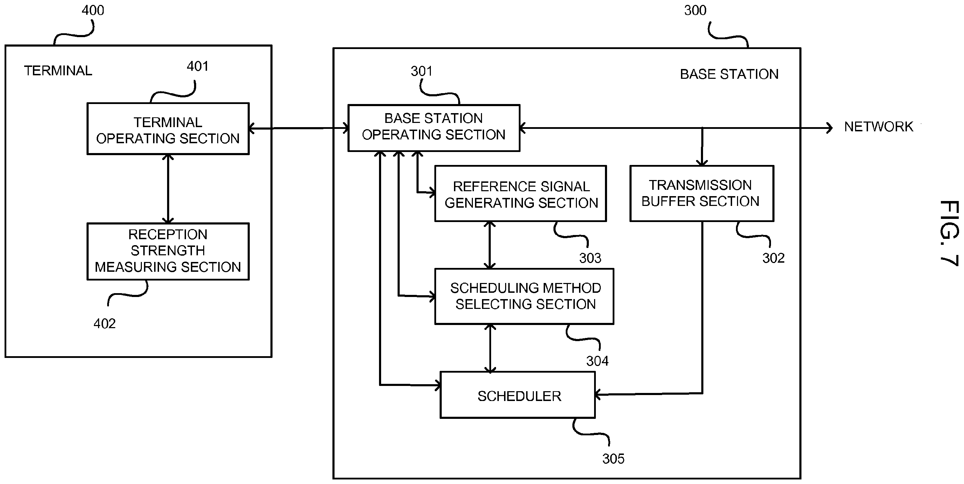

FIG. 7 is a block diagram showing a configuration of a wireless communication system in the present embodiment.

Abase station 300 comprises principal functional sections including a base station operating section 301, a transmission buffer section 302, a reference signal generating section 303, a scheduling method selecting section 304, and a scheduler 305.

The base station operating section 301 is similar to the base station operating section 101 in the first embodiment shown in FIG. 1.

The transmission buffer section 302 has a function of keeping traffic data arriving from a network along with information for decision about a destination terminal and traffic, and the buffer size.

The reference signal generating section 303 has a function of transmitting a reference signal serving as a basis of communication channel quality to a base station 400 via the base station operating section 301 with certain timing.

The scheduling method selecting section 304, similar to the scheduling method selecting section 103 in the first embodiment shown in FIG. 1, has a function of deciding a non-silent segment and a silent segment in VoIP traffic for the terminal. The scheduling method selecting section 304 further has a function of deciding which of dynamic scheduling and semi-persistent scheduling is to be selected for the terminal based on the information on the communication channel reported from the terminal 400 and received by the base station operating section 301, and on traffic information kept in the transmission buffer section 302. A result of the decision is notified to the scheduler 305.

In the present embodiment, CQI (Channel Quality Information) is employed as the information on communication channel quality for use in the scheduling method selecting section 304. CQI may be calculated referring to a look-up table and using SINR. The look-up table is generally created by link level simulation simulating a physical layer.

The scheduler 305 is similar to the scheduler 104 in the first embodiment shown in FIG. 1.

The terminal 400 comprises principal functional sections including a terminal operating section 401, and a reception strength measuring section 402.

The terminal operating section 401 is similar to the terminal operating section 201 in the first embodiment shown in FIG. 1.

The reception strength measuring section 402 has a function of measuring communication channel quality, such as a received power of reference signals and/or data signals received from the base station 300, and CQI, and reporting the result to the base station 300 via the terminal operating section 401 as information on communication channel quality.

It should be noted that no logical channel group is constructed for the downlink, unlike the uplink. The base station 300 can directly confirm the buffer size of the transmission buffer section 302, or the like, for each logical channel.

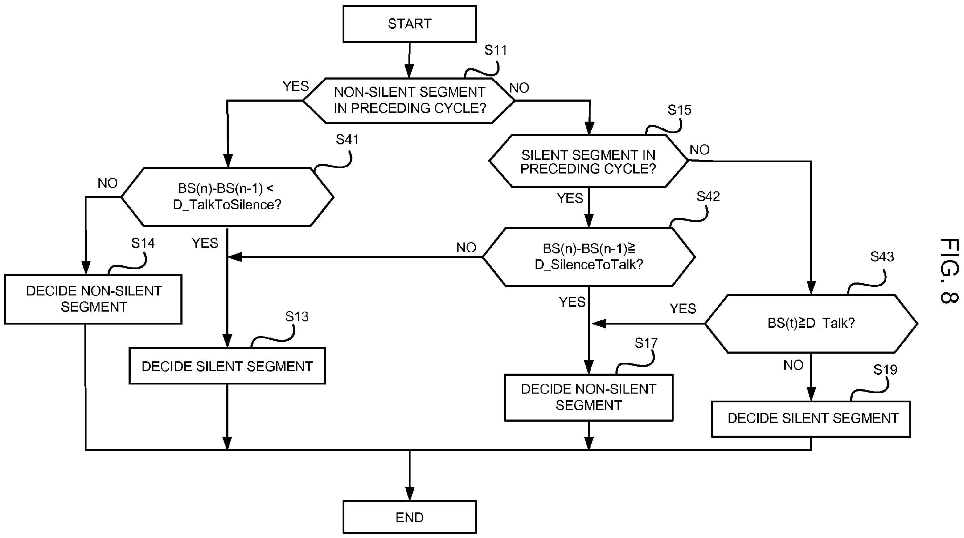

Next, an operation of the present embodiment will be described referring to the accompanying drawings. The fourth embodiment is different from the first embodiment in that an operation shown in FIG. 8, in place of FIG. 3, is conducted.

Referring to FIG. 8, the decision processing at S12, S16, and S18 in FIG. 3 are replaced by S41, S42, and S43, respectively. Specifically, the scheduling method selecting section 304 compares the current buffer size with that in a preceding cycle, and in case that a non-silent segment in the preceding cycle is decided (S11, Yes), it compares the amount of an increase of the current buffer size from that in the preceding cycle (BS(n) - BS(n-1)), and in case that the amount of an increase in buffer size is smaller than a threshold D_TalkToSilence (S41, Yes), it decides that the condition transitions to a silent segment (S13).

Likewise, in case that a silent segment in the preceding cycle is decided (S15, Yes), and in case that the amount of an increase in buffer size is equal to or greater than a threshold D_SilenceToTalk (S42, Yes), the section 304 decides that the condition transitions to a non-silent segment (S17).

In case that the current cycle is a first decision (S15, No), a non-silent segment is decided (S17) for BS(n) equal to or greater than a threshold D_Talk (S43, Yes), or a silent segment is decided (S19) for BS(n) smaller than the threshold D_Talk (S43, No).

While the present invention has been described with reference to several embodiments, the present invention is not limited to these embodiments.

For example, the present invention may be applied to other systems capable of using dynamic scheduling for allocating resources on a TTI-by-TTI basis and reservation-type scheduling in combination.

Moreover, the present invention may be applied to a system comprised of a plurality of devices, or to a single apparatus. Furthermore, the present invention may be applied to a case in which programs implementing the functions described in the embodiments above are supplied from the system or from a remote system to execute processing of the operation procedures described in these embodiments. Therefore, programs installed in a base station and executed by a processor in the base station, media storing therein the programs, and servers for downloading the programs therefrom for implementing the functions of the present invention in the base station may fall within the scope of the present invention.

### [REFERENCE SIGNS LIST]

100 Base station
101 Base station operating section
102 Reception strength measuring section
103 Scheduling method selecting section
104 Scheduler
200 Terminal
201 Terminal operating section
202 Reference signal generating section
203 Transmission buffer section
300 Base station
301 Base station operating section
302 Transmission buffer section
303 Reference signal generating section
304 Scheduling method selecting section
305 Scheduler
400 Terminal
401 Terminal operating section
402 Reception strength measuring section

## Claims

1. A wireless resource allocation method for a base station (100) performing data communication with wireless terminals (200) with traffic having periodicity in intervals of occurrence, said method comprising:
acquiring communication channel quality for each of said terminals (200);
measuring a number of terminals (200) for which a non-reservation-type scheduling method, with which allocation information is notified to the terminal (200) each time wireless resources are allocated, is currently selected;
in case that said communication channel quality is greater than, or is equal to or greater than a threshold for quality decision, selecting a reservation-type scheduling method with which cyclically usable wireless resources are reserved; and
in case that said communication channel quality is equal to or smaller than, or is smaller than said threshold for quality decision and the number of terminals (200) for which said method is currently selected is equal to or smaller than, or is smaller than a threshold of the number of admissible terminals (200), selecting the non-reservation-type scheduling method; and
performing data communication with said terminals (200) using said selected scheduling method.

2. The wireless resource allocation method according to claim 1, wherein said traffic is voice traffic.

3. The wireless resource allocation method according to claim 1, wherein said traffic is gaming traffic.

4. The wireless resource allocation method according to claim 1, wherein said traffic is traffic of a guaranteed bit rate type having a data size smaller than a data size threshold.

5. The wireless resource allocation method according to any one of claims 1 to 4, wherein said data communication is uplink data communication.

6. The wireless resource allocation method according to any one of claims 1 to 4, wherein said data communication is downlink data communication.

7. The wireless resource allocation method according to any one of claims 1 to 6, comprising:
measuring a number of terminals (200) for which said non-reservation-type scheduling method is currently selected;
searching for a high-quality terminal (200) for which a non-reservation-type scheduling method is currently selected and which has communication channel quality higher than said terminal (200); and
in case that said number of terminals (200) for which said method is currently selected is a threshold of the number of admissible terminals (200), selecting a reservation-type scheduling method for said high-quality terminal (200), and selecting a non-reservation-type scheduling method for said terminal (200).

8. The wireless resource allocation method according to any one of claims 1 to 7, wherein the communication channel quality is at least one of a received power of reference signals and/ or data signals received from a terminal, or a Signal to Interference plus Noise Ratio, SINR.

9. The wireless resource allocation method according to claim 7 or claim 8, comprising:
measuring a number of terminals (200) for which no scheduling method selection is made and which is currently performing data communication with traffic having no periodicity in intervals of occurrence; and
changing said threshold of the number of admissible terminals (200) according to said number of terminals (200) for which no method selection is made.

10. A wireless communication system comprised of a base station (100) and wireless terminals (200), for conducting wireless resource allocation to perform data communication between said base station (100) and said wireless terminals (200) with traffic having periodicity in intervals of occurrence, said base station (100) comprising:
a communication channel quality acquiring section (102) for acquiring communication channel quality for each of said terminals (200);
a scheduling method selecting section (103) for
measuring a number of terminals (200) for which a non-reservation-type scheduling method, with which allocation information is notified to the terminal (200) each time wireless resources are allocated, is currently selected;
in case that said communication channel quality is greater than, or is equal to or greater than a threshold for quality decision, selecting a reservation-type scheduling method with which cyclically usable wireless resources are reserved; and
in case that said communication channel quality is equal to or smaller than, or is smaller than the threshold for quality decision and the number of terminals (200) for which said method is currently selected is equal to or smaller than, or is smaller than a threshold of the number of admissible terminals (200), selecting the non-reservation type scheduling method; and
a scheduling section (104) for performing data communication while applying said selected scheduling method to said terminals (200).

11. A base station (100) for conducting wireless resource allocation to perform data communication with wireless terminals (200) with traffic having periodicity in intervals of occurrence, said base station (100) comprising:
a communication channel quality acquiring section (102) for acquiring communication channel quality for each of said terminals (200);
a scheduling method selecting section (103) for
measuring a number of terminals (200) for which a non-reservation-type scheduling method, with which allocation information is notified to the terminal (200) each time wireless resources are allocated, is currently selected;
in case that said communication channel quality is greater than, or is equal to or greater than a threshold for quality decision, selecting a reservation-type scheduling method with which cyclically usable wireless resources are reserved; and
in case that said communication channel quality is equal to or smaller than, or is smaller than the threshold for quality decision and the number of terminals (200) for which said method is currently selected is equal to or smaller than, or is smaller than a threshold of the number of admissible terminals (200), selecting the non-reservation type scheduling method; and
a scheduling section (104) for performing data communication while applying said selected scheduling method to said terminals (200).

12. A program for a computer for conducting wireless resource allocation to perform data communication with wireless terminals (200) with traffic having periodicity in intervals of occurrence, said program causing a program to execute:
communication channel quality acquiring processing of acquiring communication channel quality for each of said terminals (200);
scheduling method selecting processing of
measuring a number of terminals (200) for which a non-reservation-type scheduling method, with which allocation information is notified to the terminal (200) each time wireless resources are allocated, is currently selected; and
in case that said communication channel quality is greater than, or is equal to or greater than a threshold for quality decision, selecting a reservation-type scheduling method with which cyclically usable wireless resources are reserved, and
in case that said communication channel quality is equal to or smaller than, or is smaller than the threshold for quality decision and the number of terminals (200) for which said method is currently selected is equal to or smaller than, or is smaller than a threshold of the number of admissible terminals (200), selecting the non-reservation-type scheduling method; and
scheduling processing of performing data communication with said terminals (200) while applying said selected scheduling method.

## Patentansprüche

1. Verfahren zum Zuteilen von drahtlosen Ressourcen für eine Basisstation (100), die eine Datenkommunikation mit drahtlosen Endgeräten (200) mit einem Verkehr durchführt, der eine Periodizität der Intervalle des Auftretens aufweist, wobei das Verfahren aufweist:
Erfassen der Kommunikationskanalqualität für jedes der Endgeräte (200);
Messen einer Anzahl der Endgeräte (200), für die ein Nichtreservierungs-Planungsverfahren gegenwärtig ausgewählt ist, wobei dem Endgerät (200) jedes Mal Zuteilungsinformationen mitgeteilt werden, wenn drahtlose Ressourcen zugeteilt werden;
falls die Kommunikationskanalqualität größer als, oder gleich oder größer als eine Schwelle zur Qualitätsentscheidung ist, Auswählen eines Reservierungstyp-Planungsverfahrens, mit dem zyklisch verwendbare drahtlose Ressourcen reserviert werden; und
falls die Kommunikationskanalqualität gleich oder kleiner als, oder kleiner als die Schwelle zur Qualitätsentscheidung ist und die Anzahl der Endgeräte (200), für die das Verfahren gegenwärtig ausgewählt ist, gleich oder kleiner als, oder kleiner als eine Schwelle der Anzahl der zulässigen Endgeräte (200) ist, Auswählen des Nichtreservierungs-Planungsverfahrens; und
Durchführen der Datenkommunikation mit den Endgeräten (200) mittels des ausgewählten Planungsverfahrens.

2. Verfahren zum Zuteilen von drahtlosen Ressourcen nach Anspruch 1, wobei der Verkehr ein Sprachverkehr ist.

3. Verfahren zum Zuteilen von drahtlosen Ressourcen nach Anspruch 1, wobei der Verkehr ein Spielverkehr ist.

4. Verfahren zum Zuteilen von drahtlosen Ressourcen nach Anspruch 1, wobei der Verkehr ein Verkehr mit einem garantierten Bitratentyp ist, der eine Datengröße aufweist, die kleiner als eine Datengrößenschwelle ist.

5. Verfahren zum Zuteilen von drahtlosen Ressourcen nach einem der Ansprüche 1 bis 4, wobei die Datenkommunikation eine Aufwärtsstrecken-Datenkommunikation ist.

6. Verfahren zum Zuteilen von drahtlosen Ressourcen nach einem der Ansprüche 1 bis 4, wobei die Datenkommunikation eine Abwärtsstrecken-Datenkommunikation ist.

7. Verfahren zum Zuteilen von drahtlosen Ressourcen nach einem der Ansprüche 1 bis 6, das aufweist:
Messen einer Anzahl der Endgeräte (200), für die das Nichtreservierungs-Planungsverfahren gegenwärtig ausgewählt ist;
Suchen nach einem hochwertigen Endgerät (200), für das ein Nichtreservierungs-Planungsverfahren gegenwärtig ausgewählt ist und das eine höhere Kommunikationskanalqualität als das Endgerät (200) aufweist; und
falls die Anzahl der Endgeräte (200), für die das Verfahren gegenwärtig ausgewählt ist, eine Schwelle der Anzahl der zulässigen Endgeräte (200) ist, Auswählen eines Reservierungstyp-Planungsverfahrens für das hochwertige Endgerät (200), und Auswählen eines Nichtreservierungs-Planungsverfahrens für das Endgerät (200).

8. Verfahren zum Zuteilen von drahtlosen Ressourcen nach einem der Ansprüche 1 bis 7, wobei die Kommunikationskanalqualität eine Empfangsleistung von Bezugssignalen und/oder Datensignalen, die von einem Endgerät empfangen werden, und/oder ein Signal-zu-Interferenz plus Rauschleistung-Verhältnis, SINR, ist.

9. Verfahren zum Zuteilen von drahtlosen Ressourcen nach Anspruch 7 oder 8, das aufweist:
Messen einer Anzahl der Endgeräte (200), für die keine Planungsverfahrensauswahl getroffen worden ist und die gegenwärtig eine Datenkommunikation mit einem Verkehr durchführen, der keine Periodizität der Intervalle des Auftretens aufweist; und
Ändern der Schwelle der Anzahl der zulässigen Endgeräte (200) entsprechend der Anzahl der Endgeräte (200), für die keine Verfahrensauswahl getroffen worden ist.

10. Drahtloses Kommunikationssystem, das aus einer Basisstation (100) und drahtlosen Endgeräten (200) besteht, zum Durchführen einer Zuteilung von drahtlosen Ressourcen, um eine Datenkommunikation zwischen der Basisstation (100) und den drahtlosen Endgeräten (200) mit einem Verkehr durchzuführen, der eine Periodizität der Intervalle des Auftretens aufweist, wobei die Basisstation (100) aufweist:
einen Abschnitt (102) zur Erfassung der Kommunikationskanalqualität zum Erfassen der Kommunikationskanalqualität für jedes der Endgeräte (200);
einen Abschnitt (103) zur Auswahl eines Planungsverfahrens zum:
Messen einer Anzahl der Endgeräte (200), für die ein Nichtreservierungs-Planungsverfahren gegenwärtig ausgewählt ist, wobei dem Endgerät (200) jedes Mal Zuteilungsinformationen mitgeteilt werden, wenn drahtlose Ressourcen zugeteilt werden;
falls die Kommunikationskanalqualität größer als, oder gleich oder größer als eine Schwelle zur Qualitätsentscheidung ist, Auswählen eines Reservierungstyp-Planungsverfahrens, mit dem zyklisch verwendbare drahtlose Ressourcen reserviert werden; und
falls die Kommunikationskanalqualität gleich oder kleiner als, oder kleiner als die Schwelle zur Qualitätsentscheidung ist und die Anzahl der Endgeräte (200), für die das Verfahren gegenwärtig ausgewählt ist, gleich oder kleiner als, oder kleiner als eine Schwelle der Anzahl der zulässigen Endgeräte (200) ist, Auswählen des Nichtreservierungs-Planungsverfahrens; und
einen Planungsabschnitt (104) zum Durchführen einer Datenkommunikation, während das ausgewählte Planungsverfahren auf die Endgeräte (200) angewendet wird.

11. Basisstation (100) zum Durchführen einer Zuteilung von drahtlosen Ressourcen, um eine Datenkommunikation mit drahtlosen Endgeräten (200) mit einem Verkehr durchzuführen, der eine Periodizität der Intervalle des Auftretens aufweist, wobei die Basisstation (100) aufweist:
einen Abschnitt (102) zur Erfassung der Kommunikationskanalqualität zum Erfassen der Kommunikationskanalqualität für jedes der Endgeräte (200);
einen Abschnitt (103) zur Auswahl eines Planungsverfahrens zum:
Messen einer Anzahl der Endgeräte (200), für die ein Nichtreservierungs-Planungsverfahren gegenwärtig ausgewählt ist, wobei dem Endgerät (200) jedes Mal Zuteilungsinformationen mitgeteilt werden, wenn drahtlose Ressourcen zugeteilt werden;
falls die Kommunikationskanalqualität größer als, oder gleich oder größer als eine Schwelle zur Qualitätsentscheidung ist, Auswählen eines Reservierungstyp-Planungsverfahrens, mit dem zyklisch verwendbare drahtlose Ressourcen reserviert werden; und
falls die Kommunikationskanalqualität gleich oder kleiner als, oder kleiner als die Schwelle zur Qualitätsentscheidung ist und die Anzahl der Endgeräte (200), für die das Verfahren gegenwärtig ausgewählt ist, gleich oder kleiner als, oder kleiner als eine Schwelle der Anzahl der zulässigen Endgeräte (200) ist, Auswählen des Nichtreservierungs-Planungsverfahrens; und
einen Planungsabschnitt (104) zum Durchführen einer Datenkommunikation, während das ausgewählte Planungsverfahren auf die Endgeräte (200) angewendet wird.

12. Programm für einen Computer zum Durchführen einer Zuteilung von drahtlosen Ressourcen, um eine Datenkommunikation mit drahtlosen Endgeräten (200) mit einem Verkehr durchzuführen, der eine Periodizität der Intervalle des Auftretens aufweist, wobei das Programm ein Programm veranlasst auszuführen:
eine Verarbeitung zum Erfassen der Kommunikationskanalqualität zum Erfassen der Kommunikationskanalqualität für jedes der Endgeräte (200);
eine Verarbeitung zum Auswählen eines Planungsverfahren zum:
Messen einer Anzahl der Endgeräte (200), für die ein Nichtreservierungs-Planungsverfahren gegenwärtig ausgewählt ist, wobei dem Endgerät (200) jedes Mal Zuteilungsinformationen mitgeteilt werden, wenn drahtlose Ressourcen zugeteilt werden; und
falls die Kommunikationskanalqualität größer als, oder gleich oder größer als eine Schwelle zur Qualitätsentscheidung ist, Auswählen eines Reservierungstyp-Planungsverfahrens, mit dem zyklisch verwendbare drahtlose Ressourcen reserviert werden, und falls die Kommunikationskanalqualität gleich oder kleiner als, oder kleiner als die Schwelle zur Qualitätsentscheidung ist und die Anzahl der Endgeräte (200), für die das Verfahren gegenwärtig ausgewählt ist, gleich oder kleiner als, oder kleiner als eine Schwelle der Anzahl der zulässigen Endgeräte (200) ist, Auswählen des Nichtreservierungs-Planungsverfahrens; und
eine Planungsverarbeitung zum Durchführen einer Datenkommunikation mit den Endgeräten (200), während das ausgewählte Planungsverfahren angewendet wird.

## Revendications

1. Procédé d'allocation de ressources sans fil pour une station de base (100) réalisant une communication de données avec des terminaux sans fil (200) avec un trafic ayant une périodicité dans des intervalles d'occurrence, ledit procédé comprenant :
l'acquisition d'une qualité de voie de communication pour chacun desdits terminaux (200) ;
la mesure d'un nombre de terminaux (200) pour lesquels un procédé d'ordonnancement de type sans réservation, avec lequel des informations d'allocation sont notifiées au terminal (200) à chaque fois que des ressources sans fil sont allouées, est actuellement sélectionné ;
dans le cas où ladite qualité de voie de communication est supérieure, ou est supérieure ou égale à un seuil de décision de qualité, la sélection d'un procédé d'ordonnancement de type réservation avec lequel des ressources sans fil utilisables cycliquement sont réservées ; et
dans un cas où ladite qualité de voie de communication est inférieure ou égale, ou est inférieure audit seuil de décision de qualité et le nombre de terminaux (200) pour lesquels ledit procédé est actuellement sélectionné est inférieur ou égal, ou inférieur à un seuil du nombre de terminaux admissibles (200), la sélection du procédé d'ordonnancement de type sans réservation ; et
la réalisation d'une communication de données avec desdits terminaux (200) à l'aide dudit procédé d'ordonnancement sélectionné.

2. Procédé d'allocation de ressources sans fil selon la revendication 1, dans lequel ledit trafic est un trafic vocal.

3. Procédé d'allocation de ressources sans fil selon la revendication 1, dans lequel ledit trafic est un trafic de jeu.

4. Procédé d'allocation de ressources sans fil selon la revendication 1, dans lequel ledit trafic est un trafic d'un type de débit binaire garanti ayant une taille de données inférieure à un seuil de taille de données.

5. Procédé d'allocation de ressources sans fil selon l'une quelconque des revendications 1 à 4, dans lequel ladite communication de données est une communication de données en liaison montante.

6. Procédé d'allocation de ressources sans fil selon l'une quelconque des revendications 1 à 4, dans lequel ladite communication de données est une communication de données en liaison descendante.

7. Procédé d'allocation de ressources sans fil selon l'une quelconque des revendications 1 à 6, comprenant :
la mesure d'un nombre de terminaux (200) pour lesquels ledit procédé d'ordonnancement de type sans réservation est actuellement sélectionné ;
la recherche d'un terminal de grande qualité (200) pour lequel un procédé d'ordonnancement de type sans réservation est actuellement sélectionné et qui a une qualité de voie de communication supérieure audit terminal (200) ; et
dans le cas où ledit nombre de terminaux (200) pour lesquels ledit procédé est actuellement sélectionné est un seuil du nombre de terminaux admissibles (200), la sélection d'un procédé d'ordonnancement de type réservation pour ledit terminal de grande qualité (200), et la sélection d'un procédé d'ordonnancement de type sans réservation pour ledit terminal (200).

8. Procédé d'allocation de ressources sans fil selon l'une quelconque des revendications 1 à 7, dans lequel la qualité de voie de communication est au moins l'un d'une puissance reçue de signaux de référence et/ou de signaux de données reçus en provenance d'un terminal, ou d'un rapport signal sur interférence plus bruit, SINR.

9. Procédé d'allocation de ressources sans fil selon la revendication 7 ou la revendication 8, comprenant :
la mesure d'un nombre de terminaux (200) pour lesquels aucune sélection de procédé d'ordonnancement n'est réalisée et qui réalise actuellement une communication de données avec un trafic n'ayant pas de périodicité dans des intervalles d'occurrence ; et
le changement dudit seuil du nombre de terminaux admissibles (200) selon ledit nombre de terminaux (200) pour lesquels aucune sélection de procédé n'est réalisée.

10. Système de communication sans fil composé d'une station de base (100) et de terminaux sans fil (200), pour effectuer une allocation de ressources sans fil afin de réaliser une communication de données entre ladite station de base (100) et lesdits terminaux sans fil (200) avec un trafic ayant une périodicité dans des intervalles d'occurrence, ladite station de base (100) comprenant :
une section d'acquisition de qualité de voie de communication (102) pour acquérir une qualité de voie de communication pour chacun desdits terminaux (200) ;
une section de sélection de procédé d'ordonnancement (103) pour
mesurer un nombre de terminaux (200) pour lesquels un procédé d'ordonnancement de type sans réservation, avec lequel des informations d'allocation sont notifiées au terminal (200) à chaque fois que des ressources sans fil sont allouées, est actuellement sélectionné ;
dans le cas où ladite qualité de voie de communication est supérieure, ou est supérieure ou égale à un seuil de décision de qualité, la sélection d'un procédé d'ordonnancement de type réservation avec lequel des ressources sans fil utilisables cycliquement sont réservées ; et
dans un cas où ladite qualité de voie de communication est inférieure ou égale, ou est inférieure au seuil de décision de qualité et le nombre de terminaux (200) pour lesquels ledit procédé est actuellement sélectionné est inférieur ou égal, ou est inférieur à un seuil du nombre de terminaux admissibles (200), la sélection du procédé d'ordonnancement de type sans réservation ; et
une section d'ordonnancement (104) pour réaliser une communication de données tout en appliquant ledit procédé d'ordonnancement sélectionné auxdits terminaux (200).

11. Station de base (100) pour effectuer une allocation de ressources sans fil afin de réaliser une communication de données avec des terminaux sans fil (200) avec un trafic ayant une périodicité dans des intervalles d'occurrence, ladite station de base (100) comprenant :
une section d'acquisition de qualité de voie de communication (102) pour acquérir une qualité de voie de communication pour chacun desdits terminaux (200) ;
une section de sélection de procédé d'ordonnancement (103) pour
mesurer un nombre de terminaux (200) pour lesquels un procédé d'ordonnancement de type sans réservation, avec lequel des informations d'allocation sont notifiées au terminal (200) à chaque fois que des ressources sans fil sont allouées, est actuellement sélectionné ;
dans le cas où ladite qualité de voie de communication est supérieure, ou est supérieure ou égale à un seuil de décision de qualité, la sélection d'un procédé d'ordonnancement de type réservation avec lequel des ressources sans fil utilisables cycliquement sont réservées ; et
dans un cas où ladite qualité de voie de communication est inférieure ou égale, ou est inférieure au seuil de décision de qualité et le nombre de terminaux (200) pour lesquels ledit procédé est actuellement sélectionné est inférieur ou égal, ou est inférieur à un seuil du nombre de terminaux admissibles (200), la sélection du procédé d'ordonnancement de type sans réservation ; et
une section d'ordonnancement (104) pour réaliser une communication de données tout en appliquant ledit procédé d'ordonnancement sélectionné auxdits terminaux (200).

12. Programme pour un ordinateur pour effectuer une allocation de ressources sans fil afin de réaliser une communication de données avec des terminaux sans fil (200) avec un trafic ayant une périodicité dans des intervalles d'occurrence, ledit programme amenant un programme à exécuter :
un traitement d'acquisition de qualité de voie de communication consistant à acquérir une qualité de voie de communication pour chacun desdits terminaux (200) ;
un traitement de sélection de procédé d'ordonnancement consistant à
mesurer un nombre de terminaux (200) pour lesquels un procédé d'ordonnancement de type sans réservation, avec lequel des informations d'allocation sont notifiées au terminal (200) à chaque fois que des ressources sans fil sont allouées, est actuellement sélectionné ; et
dans le cas où ladite qualité de voie de communication est supérieure, ou est supérieure ou égale à un seuil de décision de qualité, sélectionner un procédé d'ordonnancement de type réservation avec lequel des ressources sans fil utilisables cycliquement sont réservées ; et
dans un cas où ladite qualité de voie de communication est inférieure ou égale, ou est inférieure au seuil de décision de qualité et le nombre de terminaux (200) pour lesquels ledit procédé est actuellement sélectionné est inférieur ou égal, ou est inférieur à un seuil du nombre de terminaux admissibles (200), sélectionner le procédé d'ordonnancement de type sans réservation ; et
un traitement d'ordonnancement consistant à réaliser une communication de données avec lesdits terminaux (200) tout en appliquant ledit procédé d'ordonnancement sélectionné.
